# EUROPEAN PATENT APPLICATION

(11) **EP 3 603 414 A1**
(43) Date of publication of application: **05.02.2020**
(21) Application number: 18776227.3
(22) Date of filing: 28.03.2018
(51) Int. Cl.: A23L 15/00

(54) **METHOD FOR OBTAINING LOW-TEMPERATURE BOILED EGGS AND RESULTING PRODUCT**

(30) Priority: 31.03.2017 ES 201700527
(71) Applicant: Granja Campomayor SL, 27217 Palas de Rei-Lugo (ES)
(72) Inventor: GARCIA GARCIA, Rodrigo, 27217 Palas de Rei-Lugo (ES)
(74) Representative: Álvarez Flores, Alberto
(86) International application number: PCT/ES2018/070275
(87) International publication number: WO 2018/178486

(57) **Abstract**

Method for obtaining eggs at low temperature and the obtained egg at low temperature.

The method comprises stages of homogeneous selection of hen eggs, disinfection, cooking at constant temperature, refrigeration, drying, and shell paraffining. The egg at low temperature can be consumed either cold or hot. If it is desired to consume it cold, the only thing that needs to be done is to remove the shell. On the other hand, if it is desired to consume it hot, it should previously be regenerated with the shell on, e.g. with a microwave oven, in a water bath or steamed.

The egg at low temperature obtained with the method which is the subject matter of this invention can be manufactured on an industrial scale in order for it to be subsequently put on the market.

## Description

### SUBJECT MATTER OF THE INVENTION

The subject matter of the present invention falls within the state of the art of food methods and products manufactured on an industrial scale, in particular, to put them on the market as eggs at low temperature, a new product which up until now has had a high demand but which has been restricted to restaurants of a certain gastronomical standing in order for them to be consumed right after being prepared.

### BACKGROUND OF THE INVENTION

There is currently high demand from haute cuisine restaurants for eggs prepared or cooked at low temperature, whereby they must be eaten right after being prepared. Every cook or chef has their own recipe, which follows similar guidelines as to the cooking temperature, usually within the 60-72 °C range, the temperature usually remaining constant over the cooking time. This is a cooking process requiring some skill and whose result is not always the same, so sometimes the cooking process has to be repeated because the result obtained was not as expected. These variations are due to certain characteristics of the eggs (weight, protein ratio, shell uniformity...), which entail different results despite the same cooking temperature and time being used.

Therefore, obtaining in a standardized manner the characteristics expected of an egg cooked at low temperature is difficult, which complicates manufacturing such eggs on an industrial scale, their distribution and their subsequent regeneration for human consumption. This is the reason why eggs cooked at low temperatures have not reached the sales chain.

### DESCRIPTION OF THE INVENTION

The purpose of the subject matter of the present invention - a method for obtaining an egg at low temperature and the egg at low temperature obtained with said method - is to overcome the problems described above in order to be able to manufacture an egg at low temperature on an industrial scale and to enable it to be commercially distributed.

The egg at low temperature that is the subject matter of the present invention is preferably obtained from a selection of eggs of similar sizes and weights and more preferably from hens at least 25 to 50 weeks old and 1 to 20 days after the laying date. The ideal weights range from 53 to 67 g.

According to the invention, the selected eggs are steamed, cooked in a bain-marie, vacuum-cooked or boiled in water at a constant temperature between 60 and 72 °C, preferably between 62 and 67 °C, for a time ranging from 20 to 35 min. Regulation-approved disinfection treatments may be applied depending on their intended use before or after the cooking stage. These treatments could consist in applying hypochlorite, peroxide and/or natural or synthetic antiseptics and/or antimicrobials in suitable doses and for suitable times. Once the eggs have been disinfected - or not - and cooked, they are refrigerated at a temperature between 0 and 12 °C, preferably between 4 and 8 °C, for the necessary time, e.g. 10 min.

Then, the eggs are dried if necessary. If they are going to be kept for a while, their shells can be coated with food-grade paraffin or another food-grade waterproofing product to preserve them (with the eggs dry).

Finally, once the proofing product has dried (optionally, the drying may be sped up using means known in the state of the art), the eggs are packaged and labelled as required by regulations and their intended use. If the eggs are not going to be consumed shortly, they are refrigerated before being distributed to the final points of sale. The eggs at low temperature must be kept refrigerated until the time of consumption, although if an effective combination of disinfection treatment and proofing product applied to the eggs' surface is applied, the eggs could be kept at room temperature (12-30 °C).

With the above-described method, an egg at low temperature is obtained - which is also the subject matter of the present invention - as a standardised, high quality product, thus constituting a new manufactured-product line for commercial distribution and also for use in the restaurant industry.

The egg at low temperature can be consumed cold or, alternatively, hot. If it is desired to consume it cold, the only thing that needs to be done is to remove the shell. On the other hand, if it is desired to consume it hot, it should be previously regenerated with the shell on, e.g. with a microwave oven, in a water bath or steamed.

Other variants will be detailed in the other parts hereof.

### PREFERRED EMBODIMENT OF THE INVENTION

A preferred embodiment of the method which is the subject matter of the present invention is detailed below, three alternatives being provided when the egg at low temperature, which is also the subject matter of the invention, is to be regenerated in order to be consumed hot.

The industrial method consists of a first stage of cleaning and selection of eggs such that their properties are as homogeneous as possible (shell thickness, weight, height...) . This selection can be done using equipment for sorting them by size and weight.

Preferably, the hens will be 25 to 50 months old. This time interval encompasses the hens' weeks of life when egg laying is optimal. The quality of the white and its proteins in this age range is optimal, thus helping to give the egg its characteristic consistency after the thermal method.

On the other hand, it is also desirable for the laying date to be sufficiently recent for the contents of the egg to retain greater organoleptic quality. Both variables - hen age and laying date - can be known by means of the traceability of eggs that many regulations call for.

If the method is to be monitored at small scale, this first stage can be omitted and the times scheduled according to the availability of eggs.

Next, the selected eggs are cooked at a temperature between 60 and 72 °C for a time ranging from 20 to 35 min, said cooking temperature being kept constant. The eggs are then refrigerated at a temperature between 0 and 12 °C for e.g. 10 min until they reach an internal temperature of 0 to 12 °C, after which they will be stored in a cold room. Cooking can take place in boiling water, in an oven, in a bain-marie, at vacuum or by steaming. If desired, appetising substances (e.g. truffle, chocolate, vanilla, garlic or other aromas) can be added to the cooking water or steam or placed inside their sealed bag when the eggs are being vacuum-cooked.

Then, if the eggs are wet after refrigeration, they are dried by any desired method, and once they are completely dry, the shells are coated with food-grade paraffin or another food-grade waterproofing product to increase their shelf life. If a proofing coat is not used, the eggs will have a shorter shelf life.

Finally, once the waterproofing product has dried (optionally, the drying may be sped up using means known in the state of the art), the eggs are packaged, labelled (as per the appropriate regulations) and stored under refrigeration before being distributed to the final points of sale. The eggs at low temperature must be kept refrigerated until the time comes when they are to be consumed. However, they can also be kept at room temperature if suitable disinfection and cooking means are used.

Thus, the most preferred example of the method of the invention would be the following:

### Example 1.

- Eggs laid by hens 25 to 50 weeks old and weighing 53 g or almost this weight are selected 1 to 20 days after the laying date.
- The selected eggs are cooked at a temperature of 62 °C for 25 min in a Roner, said cooking temperature being kept constant.
- Next, the eggs are put in a water bath to cool them down to a temperature of 6 °C for 10 min.
- Then, the eggs are dried in a current of clean air and kept dry.
- Finally, the shells are coated with food-grade paraffin and left to dry, eggs at low temperature ready to be put on the market being obtained.

Three preferred embodiments of the stages for regenerating the egg at low temperature obtained in the prior stage in order for it to be consumed hot are detailed below:
- Regeneration in a microwave oven. The egg is put in a microwave oven and cooked at medium-high power for 55 s or, alternatively, at minimum power for 3 min.
- Regeneration in a water bath. The egg is placed inside a pot full of water and heated at 60 °C between 5 and 10 min.
- Regeneration by steaming. The egg is put in a steam oven at 65 °C for 6 min.

## Claims

1. A method for obtaining eggs at low temperature, **characterized by** comprising the following stages:
- Cooking the eggs at a constant temperature between 60 and 72 °C, preferably between 62 and 67 °C, for a time period ranging from 20 to 35 min, and
- refrigerating said eggs obtained in the cooking stage until they reach an internal temperature between 0 and 12 °C.

2. The method for obtaining an egg at low temperature according to the preceding claim, **characterised in that** it comprises an egg disinfection stage before or after the cooking stage.

3. The method for obtaining an egg at low temperature according to any of the preceding claims, **characterised in that** it comprises a stage of drying the obtained eggs before or after the refrigeration stage.

4. The method for obtaining an egg at low temperature according to any of the preceding claims, **characterised in that** it comprises a final stage of applying a coating to the dry shells of the eggs obtained in the drying stage with a food-grade waterproofing product.

5. The method for obtaining an egg at low temperature according to any of the preceding claims, **characterised in that** it comprises an initial stage of selection of hen eggs having homogeneous weight and/or dimension characteristics.

6. The method for obtaining an egg at low temperature according to the preceding claim, **characterized by** the selection of eggs between 1 and 20 days after the laying date from hens that are 25 to 50 weeks old.

7. The method for obtaining an egg at low temperature according to claim 3, **characterised in that** it comprises an additional stage of drying said waterproofing product.

8. The method for obtaining an egg at low temperature according to any of the preceding claims, **characterised in that** it comprises an initial stage of regeneration of the egg obtained in the protection stage by means of a microwave oven or a hot water bath or by steaming.

9. The method for obtaining an egg at low temperature according to claim 1, **characterised in that** the cooking is done in a Roner, a temperature-controlled water bath or an oven.

10. The method for obtaining an egg at low temperature according to claim 1, **characterised in that** the refrigeration takes place in a water bath or an oven.

11. An egg at low temperature obtained with any of the methods of the preceding claims.
